# EUROPEAN PATENT APPLICATION

(11) **EP 3 228 743 A1**
(43) Date of publication of application: **11.10.2017**
(21) Application number: 16398005.5
(22) Date of filing: 05.04.2016
(51) Int. Cl.: D21C 11/12

(54) **SELECTIVE REMOVAL OF K+ AND CL- FROM RECOVERY BOILER ELECTROSTATIC PRECIPITATOR ASHES IN A KRAFT PROCESS**

(71) Applicant: L'AIR LIQUIDE, Société Anonyme pour l'Etude et l'Exploitation des Procédés Georges Claude, 75007 Paris (FR); Sociedade Portuguesa do Ar Líquido, 1495-131 Algés (PT)
(72) Inventor: Correia Alves, Carlos Alberto, 2950-072 Lagoinha - Palmela (PT); Estima de Oliveira Araújo, Arnaldo Manuel, 1150-200 Lisboa (PT)
(74) Representative: Ferreira, Maria Silvina

(57) **Abstract**

The present application discloses an alternative method for selective removal of K⁺ and Cl⁻ from recovery boiler electrostatic precipitator ashes in a kraft-pulp process through the use of pure or impure CO₂, complemented or not with a mineral acid, for instance Sulfuric Acid/Spent Acid.

## Description

### Technical domain

The present application discloses an alternative method for selective removal of K⁺ and Cl⁻ from recovery boiler electrostatic precipitator ashes in a kraft-pulp process through the use of pure or impure CO₂, complemented or not with a mineral acid, for instance Sulfuric Acid and/or Spent Acid.

### Prior art

The kraft process (also known as kraft pulping process) is a process for conversion of wood into wood pulp consisting of almost pure cellulose fibers. It entails treatment of wood chips with a mixture of sodium hydroxide and sodium sulfide, known as white liquor, which breaks the bonds that link lignin to the cellulose.

A common kraft process comprises the following steps:
- Impregnation;
- Cooking;
- Recovery process;
- Blowing;
- Screening;
- Washing;
- Bleaching;
- Optional process chemicals.

Common wood chips used in pulp production are 12-25 millimetres (0.47-0.98 in) long and 2-10 millimeters (0.079-0.394 in) thick. The chips normally first enter the *presteaming* where they are wetted and preheated with steam. Cavities inside fresh wood chips are partly filled with liquid and partly with air. The steam treatment causes the air to expand and about 25% of the air to be expelled from the chips. The next step is to saturate the chips with black and white liquor. Air remaining in chips at the beginning of liquor impregnation is trapped within the chips. The impregnation can be done before or after the chips enters the digester and is normally done below 100 °C (212 °F). The cooking liquors consist of a mixture of white liquor, water in chips, condensed steam and weak black liquor. In the impregnation, cooking liquor penetrates into the capillary structure of the chips and low temperature chemical reactions with the wood begin. A good impregnation is important to get a homogeneous cook and low rejects. About 40-60% of all alkali consumption in the continuous process occurs in the impregnation zone.

The wood chips are then cooked in pressurized vessels called digesters. Some digesters operate in a batch manner and some in a continuous process. There are several variations of the cooking processes both for the batch and the continuous digesters. Digesters producing 1,000 tonnes or more of pulp per day are common, with the largest producing more than 3,500 tonnes per day. In a continuous digester, the materials are fed at a rate which allows the pulping reaction to be complete by the time the materials exit the reactor. Typically, delignification requires several hours at 170 to 176 °C (338 to 349 °F). Under these --conditions lignin and hemicellulose degrade to give fragments that are soluble in the strongly basic liquid. The solid pulp (about 50% by weight of the dry wood chips) is collected and washed. At this point the pulp is known as *brown stock* because of its color. The combined liquids, known as black liquor (because of its color), contain lignin fragments, carbohydrates from the breakdown of hemicellulose, sodium carbonate, sodium sulfate and other inorganic salts. One of the main chemical reactions that underpin the kraft process is the scission of ether bonds by the nucleophilic sulfide (S²⁻) or bisulfide (HS⁻) ions.

The excess black liquor contains about 15% solids and is concentrated in a multiple effect evaporator. After the first step the black liquor has about 20 - 30% solids. At this concentration - if the wood used in the pulping process is softwood - the rosin soap rises to the surface and is skimmed off. The collected soap is further processed to tall oil. Removal of the soap improves the evaporation operation of the later effects.

The weak black liquor is further evaporated to 65% or even 80% solids ("heavy black liquor"^{]}) and burned in the recovery boiler to recover the inorganic chemicals for reuse in the pulping process. Higher solids in the concentrated black liquor increases the energy and chemical efficiency of the recovery cycle, but also gives higher viscosity and precipitation of solids (plugging and fouling of equipment). During combustion sodium sulfate is reduced to sodium sulfide by the organic carbon in the mixture:

1. Na₂SO₄ + 2C → Na₂S + 2 CO₂

This reaction 1 is similar to thermochemical sulfate reduction in geochemistry.
A small, but significant, part of the combustion products are emitted to the flue gas and entrained upstream towards the heat transfer areas of the boiler. This stream is called fly ash and has to be separated from the gas stream because of two main reasons: environmental regulations for ash discharge to air and economical reasons since it mainly consists of useful process chemicals, where Na₂SO₄ together with Na₂CO₃ are the dominating salts. The separation is carried out in an electrostatic precipitator which generates a ash, ESP (Electrostatic Precipitator) ash that can be recirculated back to the black liquor right before the black liquor is fed to the recovery boiler. The recycling of ESP ash has been estimated to account for approximately 10 % of the inorganic content in the black liquor.

The molten salts ("smelt") from the recovery boiler are dissolved in a process water known as "weak wash." This process water, also known as "weak white liquor" is composed of all liquors used to wash lime mud and green liquor precipitates. The resulting solution of sodium carbonate and sodium sulfide is known as "green liquor", although it is not known exactly what causes the liquor to be green. This liquid is mixed with calcium oxide, which becomes calcium hydroxide in solution, to regenerate the white liquor used in the pulping process through an equilibrium reaction (Na₂S is shown since it is part of the green liquor, but does not participate in the reaction):

2. Na₂S + Na₂CO₃ + Ca(OH)₂ ↔ Na₂S + 2 NaOH + CaCO₃

Calcium carbonate precipitates from the white liquor and is recovered and heated in a lime kiln where it is converted to calcium oxide (lime).

3. CaCO₃ → CaO + CO₂

Calcium oxide (lime) is reacted with water to regenerate the calcium hydroxide used in Reaction 2:

4. CaO + H₂O → Ca(OH)₂

The combination of reactions 1 through 4 form a closed cycle with respect to sodium, sulfur and calcium and is the main concept of the so-called recausticizing process where sodium carbonate is reacted to regenerate sodium hydroxide.

The recovery boiler also generates high pressure superheated steam which is fed to turbines that drive electrical generators, reducing the steam pressure for the mill use and generating electricity. A modern kraft pulp mill is more than self-sufficient in its electrical generation and normally will provide a net flow of energy which can be used by an associated paper mill or sold to neighboring industries or communities through to the local electrical grid. Additionally, bark and wood residues are often burned in a separate power boiler to generate steam.

The finished cooked wood chips are blown to a collection tank called a blow tank that operates at atmospheric pressure. This releases a lot of steam and volatiles. The volatiles are condensed and collected.

Screening of the pulp after pulping is a process whereby the pulp is separated from large shives, knots, dirt and other debris. The *accept* is the pulp. The material separated from the pulp is called *reject.*

The screening section consists of different types of sieves (screens) and centrifugal cleaning. The sieves are normally set up in a multistage cascade operation because considerable amounts of good fibers can go to the reject stream when trying to achieve maximum purity in the accept flow.

The fiber containing shives and knots are separated from the rest of the reject and reprocessed either in a refiner and/or is sent back to the digester. The content of knots is typically 0.5 - 3.0% of the digester output, while the shives content is about 0.1- 1.0%.

The brownstock from the blowing goes to the washing stages where the used cooking liquors are separated from the cellulose fibers. Normally a pulp mill has 3-5 washing stages in series. Washing stages are also placed after oxygen delignification and between the bleaching stages as well. Pulp washers use counter current flow between the stages such that the pulp moves in the opposite direction to the flow of washing waters. Several processes are involved: thickening/dilution, displacement and diffusion.
The dilution factor is the measure of the amount of water used in washing compared with the theoretical amount required to displace the liquor from the thickened pulp. Lower dilution factor reduces energy consumption, while higher dilution factor normally gives cleaner pulp. Thorough washing of the pulp reduces the chemical oxygen demand (COD).

In a modern mill, brownstock (cellulose fibers containing approximately 5% residual lignin) produced by the pulping is first washed to remove some of the dissolved organic material and then further delignified by a variety of bleaching stages.

In the case of a plant designed to produce pulp to make brown sack paper or linerboard for boxes and packaging, the pulp does not always need to be bleached to a high brightness. Bleaching decreases the mass of pulp produced by about 5%, decreases the strength of the fibers and adds to the cost of manufacture.
In the Kraft Pulping process, electrofilter ash contains mainly Na₂SO₄ and Na₂CO₃, together with a variable concentration of K⁺ and Cl⁻ which are noxious substances in the kraft process. K salts create deposits in the boiler tubes of the recovery boiler, thus reducing the heat exchange capacity of the boiler tube banks, and Cl salts create corrosion problems in the boiler tubes.

US 3833462 A describes a process of removing sodium chloride which has accumulated in the precipitator ash of the kraft pulping process chemical recovery systems without undue loss of sodium sulfate and other useful chemicals. The process basically comprises leaching precipitator ash, which contains sodium sulfate, sodium carbonate, sodium chloride and organic material, with sufficient aqueous sulfuric acid solution to produce a leached slurry of pH 3-6, thereby converting sodium carbonate to sodium sulfate and recovering sodium chloride.

Document WO 2014076361 A1 refers to a method to be used in conjunction with a single-stage or multi-stage process for leaching ash originating from the recovery boiler of a pulp mill, particularly when the ash contains a significant amount of carbonate. In the method, calcium compounds, most preferably calcium oxide (CaO) and/or calcium hydroxide (Ca(OH)2), are employed as additives in one or more leaching stages. The liquid fraction formed in the leaching process is utilized outside the main chemical recovery cycle, preferably as a substitute for purchased sodium hydroxide in the bleaching line of the pulp mill. The solids fraction may be mixed with a black-liquor stream of the mill or subjected to further processing in order to separate calcium compounds for recycle.

Additionally, the document WO 1996012847 A1 describes a process for purifying electrostatic precipitator ash of chlorides and potassium by means of leaching, filtering and washing a filter cake, with the leaching being carried out using water and recirculated filtrate from a previous washing. The process is characterized in that the filtration and the washing of the filter cake, and, where appropriate, the leaching, take place in a pressure filter in one and the same vessel.

Therefore, currently a pulp mill has two different available alternatives to control the K⁺ and Cl⁻ buildup:
1- Purge part of the ash from the electrofilter;
2- Treat the ash to remove selectively K⁺ and Cl⁻.

The alternative 1 is expensive since it constitutes a loss of Sodium and Sulfur from the process and also a cost for the disposal of a residue.

Alternative 2: Numerous methods have during the last five decades been proposed for removal of Cl⁻ and K⁺ from the chemical recovery cycle. However there is one main, realistic, location in the recovery cycle where Cl⁻ and K⁺ can be removed with commercially available techniques: ESP (Electrostatic Precipitator) ash.

The three main technologies used for the treatment of ash are:
1. Leaching;
2. Evaporation/crystallization;
3. Freeze crystallization.

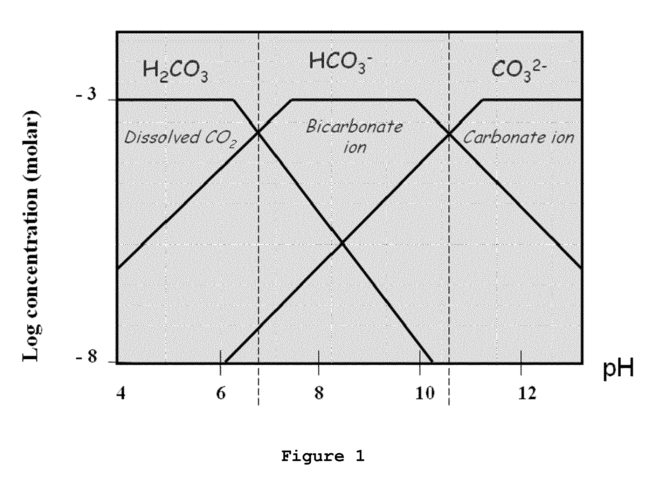

The three processes take advantage of the same basic solubility difference principle and a simple process scheme is shown in Figure 1.

Processes one to three make use of the differences in solubility between the ESP ash salt compounds. It is primarily the solubility difference between alkali sulphates (Na₂SO₄ and K₂SO₄) and alkali chlorides (NaCl and KCl) that enable the Cl and K separation.. All three processes remove Cl⁻ and K⁺ in a purge stream and recycle the purified process chemicals back to the chemical recovery cycle.

Processes that make use of solubility differences of the salts have to handle the very complex aqueous solution. In solutions of mixed salts the presence of NaCl substantially decreases the solubility of Na₂SO₄ due to the common ion effect. This is positive during leaching and crystallization. However other salts are also present which complicate the solubility of the system. Both during leaching and crystallization the conditions that separate NaCl from Na₂SO₄ also tend to remove Na₂CO₃ and thus valuable Na is lost.

K⁺ removal is more complicated than Cl⁻ removal because of the variety of compounds K⁺ can form. K⁺ may be present as K₂SO₄, or the double salt glaserite (3K₂SO₄*Na₂SO₄) after dissolving and re-crystallization. Those K⁺ containing compounds tend to behave in a similar manner as Na₂SO₄ in the system resulting in a reduced K⁺ removal during leaching and crystallization processes.

In practice it is impossible to achieve a complete separation so it is necessary to optimize the extent of Cl⁻ and K⁺ removal against Na, SO₄ and CO₃ recovery.

In order to perform Alternative 2 the ash must first be transformed into slurry or solution by adding water + filtrate from selective removal of K⁺ and Cl⁻ from recovery boiler electrofilter ashes and then the solution or saturated slurry proceeds to the process for selective removal of K⁺ and Cl⁻.

Yet, in order to release the K⁺ and Cl⁻ contaminants, the initial pH from the slurry - typically 11,7~11,4 - must be lowered to 10,0 ~ 8,0 (figure 1). The reason for this lies in the diagram represented in figure 1: the carbonate in the slurry must be converted into bicarbonate so as to improve K⁺ and Cl⁻ elimination. And only at this range of pH the quantity of carbonate ion is sufficiently low.

This operation is normally performed by adding sulfuric acid or "spent acid" from the ClO₂ generation system (ClO₂ is used in pulp bleaching and in its production process a waste acidic current is produced which consist of a mixture of sulfuric acid, sodium sulfate and water with some dissolved chlorine dioxide and chlorine). By doing this, K⁺ and Cl⁻ manage to be efficiently leached from the ash slurry. Yet there is a very important drawback: Sulfur contained in the sulfuric acid or the spent acid will be reduced in the recovery cycle and will increase the sulfidity in the recovery cycle - this will create pulp quality problems as well as environmental problems (odors) to the pulp mill. This is a frequent event in a modern kraft pulp mill and till now there was not an economical solution, without dumping ash.

### Summary

The present application relates to a method for a selective removal of K⁺ and Cl⁻ from recovery boiler Electrostatic Precipitator Ashes in a kraft process comprising the introduction of CO₂ pure or impure in the ash treatment step wherein:
- a pump and a Static Mixer is used to react the CO₂ pure with the ash solution or slurry so as to lower pH and which will partially convert the solution or slurry carbonates into bicarbonates; or
- a Self-Aspirating Turbine to react the CO₂ impure with the ash solution or slurry so as to lower pH and which will partially convert the solution or slurry carbonates into bicarbonates.

In one embodiment, is used a mixture of a mineral acid with the CO₂.

In another embodiment, the mineral acid is selected from sulfuric acid, hydrochloric acid, or Spent Acid.

In yet another embodiment, mixtures of mineral acids are used together with CO₂ in which CO₂ is injected as gas, liquid or solid phase in order to react with the ash solution or slurry, at a temperature between 15-95°C and a pressure between 0-10 atm(abs).

In another embodiment, is applied a purge in the reactor, when is used a self-aspirating turbine to react CO₂ impure.

The present application also discloses the use of the method for a selective removal of K⁺ and Cl⁻ from recovery boiler Electrostatic Precipitator ashes in a kraft process in the pulp and paper industries.

### General description

The present application describes an alternative method for a selective removal of K⁺ and Cl⁻ from recovery boiler ashes in a kraft process which doesn't impact on the sulfidity of the recovery cycle.

In this method pure or impure CO₂ is used complemented or not with a mineral acid, for instance a Sulfuric Acid/Spent Acid, in this process. This will allow the pulp mill to fine tune the process regarding sulfur balance and will bring sulfidity back into control.

In this method since during the Ash separation method that follows the Ash Treatment the pH is reduced after the injection of CO₂, we found out that in the Ash separation (by centrifugation or filtration)the treated ash has a higher concentration of solids because drainage of filtrate from the solids is enhanced due to lower pH.

The CO₂ used can be pure or impure, for instance coming from a liquid CO₂ storage or from the flue gases of any of the boilers or lime kiln. At the same time spent acid or sulfuric acid can still be used, although in lower quantities than before.

For the purpose of this patent application, pure CO₂ is intended to be a CO₂ stream with a purity between 99,0%-100,0% and impure CO₂ is intended to be a CO₂ stream with a purity between 1,0%-98,9%.

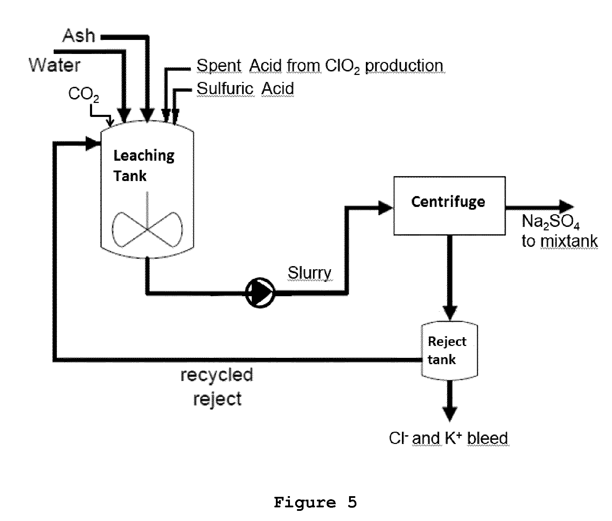

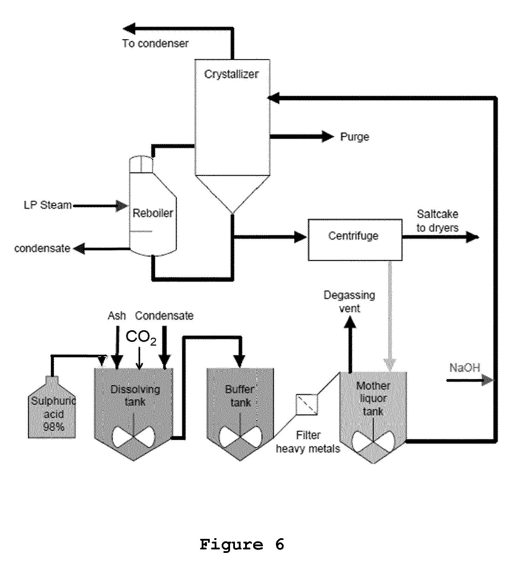

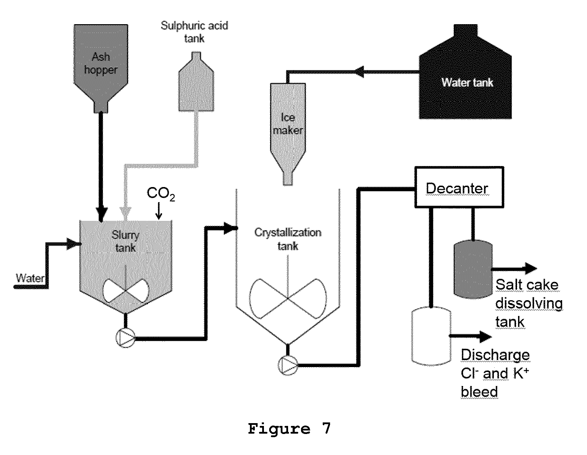

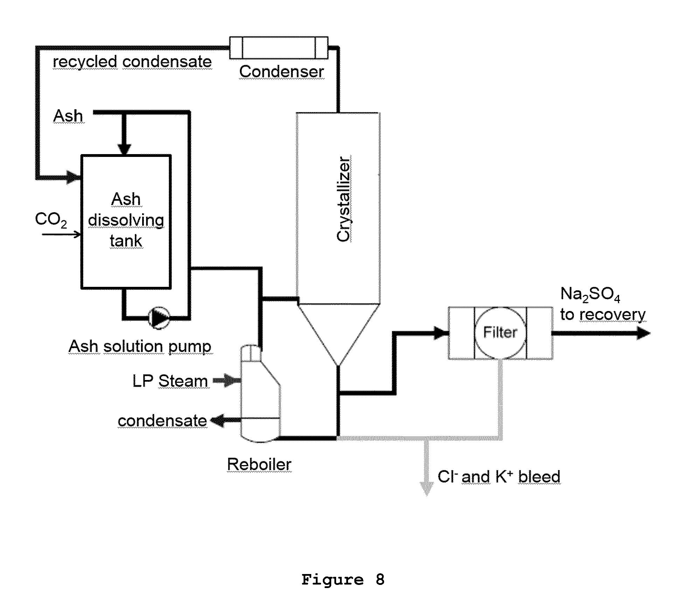

The present application describes two techniques to achieve this goal by using pure (99,0% to 100%) or impure (1,0% to 98,9%) CO₂ which can be applied to processes for selective removal of K⁺ and Cl⁻ from recovery boiler ashes represented in figures 5 to 8 - since all these processes have a step with a tank with agitation were dry ash is added to water or filtrate from selective removal of K⁺ and Cl⁻ from recovery boiler electrofilter ashes in order to make an ash solution or slurry which is further processed:
1 - Use of a pump and a Static Mixer to react the pure CO₂ with the ash solution or slurry so as to lower pH and which will partially convert the solution or slurry carbonates into bicarbonates;
2 - Use of a Self-Aspirating Turbine to react the impure CO₂ with the ash solution or slurry so as to lower pH and which will partially convert the solution or slurry carbonates into bicarbonates.

In both techniques here described, the CO₂ is injected in the system as gas, liquid or solid phase, in order to react with the ash solution or slurry, at a temperature between 15-95 °C and a pressure between 0-10 atm(abs). The second technique above presented has a higher investment than the first and is preferred to use with lower purity CO₂ - flue gases from boilers or lime kilns, since it allows for the management and purge of the inert gases in the flue gas (N₂;Ar;...)

### Brief Description of the Figures

The following figures provide preferred embodiments for illustrating the description and should not be seen as limiting the scope of invention.
**Figure 1****:** Diagram representing the typical curves for the concentration of H₂CO₃, HCO₃⁻ and CO₃²⁻ according to the pH.

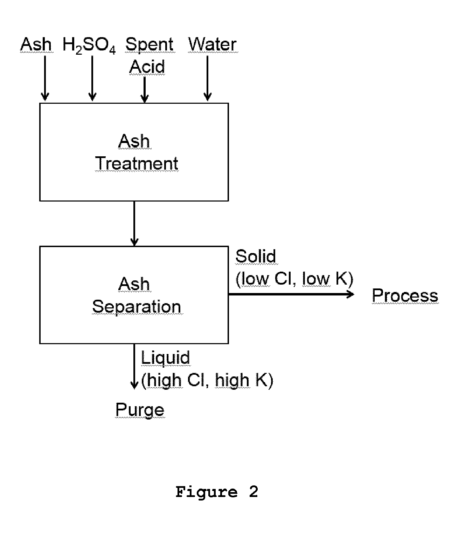

**Figure 2****:** Representation of a basic process scheme for selective removal of K⁺ and Cl⁻ from recovery boiler Electrostatic Precipitator ash.

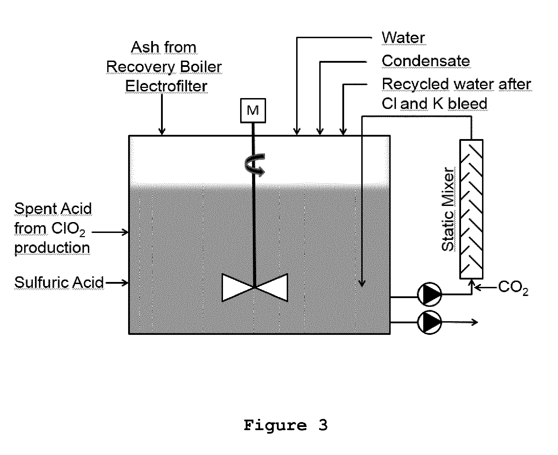

**Figure 3****:** Selective removal of K⁺ and Cl⁻ : Ash dissolving tank/ash Leaching tank: Representation of the utilization of a pump and a Static Mixer to react the CO₂ with the slurry so as to lower pH and which will partially convert the solution or slurry carbonates into bicarbonates. A recirculation loop with a pump and a static mixer is used to dose pure CO₂ in order to convert the ash carbonates into bicarbonates.

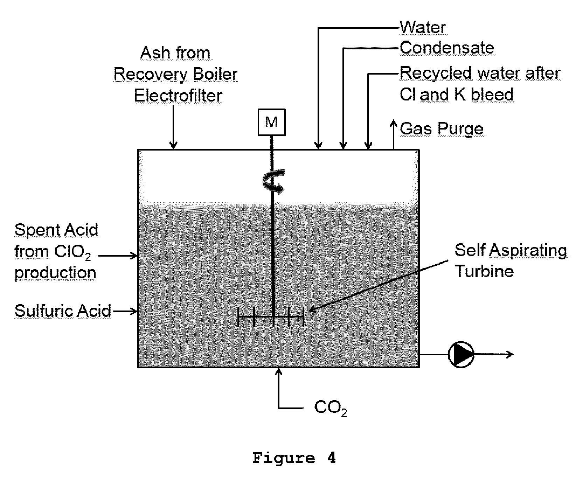

**Figure 4****:** Selective removal of K⁺ and Cl⁻ : Ash dissolving tank/ash Leaching tank: Representation of the utilization of a Self-Aspirating Turbine to react the CO₂ with the slurry so as to lower pH and which will partially convert the solution or slurry carbonates into bicarbonates. The self-aspirating turbine is more suitable to be used with an impure gas since it allows the purge of the inert gases coming with the impure CO₂ from the headspace of the reactor.
**Figure 5****:** Selective removal of K⁺ and Cl⁻ by Metso Ash Leaching™, with the incorporation of a CO₂ stream, wherein the CO₂ could be either pure or impure.
**Figure 6****:** Selective removal of K⁺ and Cl⁻ by HPD CRP™ crystallisation process, with the incorporation of a CO₂ stream, wherein the CO₂ could be either pure or impure.
**Figure 7****:** Selective removal of K⁺ and Cl⁻ by Mitsubishi MPR™ Freeze Crystallisation process, with the incorporation of a CO₂ stream, wherein the CO₂ could be either pure or impure.
**Figure 8****:** Selective removal of K⁺ and Cl⁻ by EKA PDR™ evaporation crystallisation process, with the incorporation of a CO₂ stream, wherein the CO₂ could be either pure or impure.

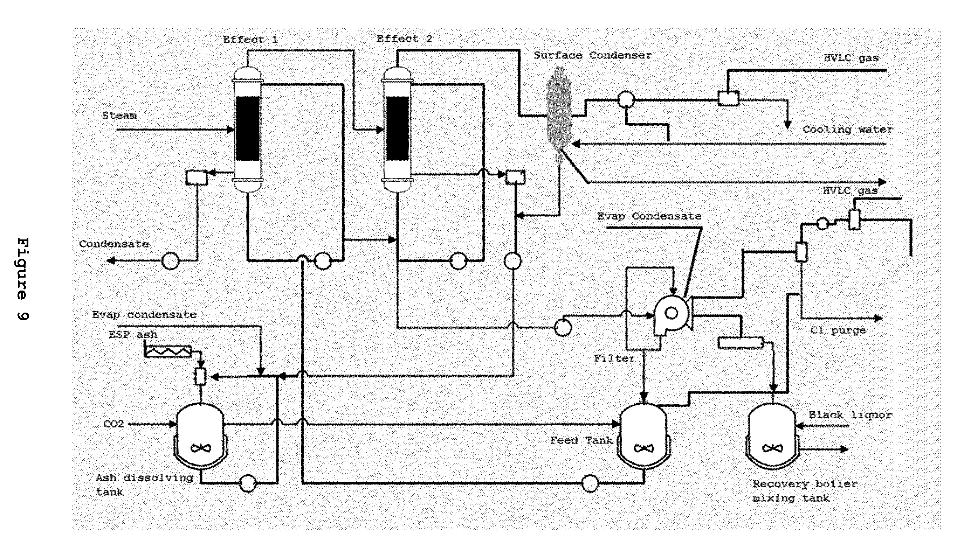

**Figure 9****:** Selective removal of K⁺ and Cl⁻ by ANDRITZ ARC™ evaporation crystallisation process, with the incorporation of a CO₂ stream, wherein the CO₂ could be either pure or impure.

The technology is of course not in any way restricted to the embodiments described herein and a person of ordinary skill in the area can provide many possibilities to modifications thereof as defined in the claims.

The preferred embodiments described above are obviously combinable. The following dependent claims define further preferred embodiments of the disclosed technology.

## Claims

1. Method for a selective removal of K⁺ and Cl⁻ from recovery boiler Electrostatic Precipitator Ashes in a kraft process comprising the introduction of CO₂ pure or impure in the ash treatment step wherein:
- a pump and a Static Mixer is used to react the CO₂ pure with the ash solution or slurry so as to lower pH and which will partially convert the solution or slurry carbonates into bicarbonates; or
- a Self-Aspirating Turbine to react the CO₂ impure with the ash solution or slurry so as to lower pH and which will partially convert the solution or slurry carbonates into bicarbonates.

2. The method according to claim 1, wherein is used a mixture of a mineral acid with the CO₂.

3. The method according to the previous claims, wherein the mineral acid is selected from sulfuric acid, hydrochloric acid, or Spent Acid.

4. The method according to the previous claims, wherein the mixtures of mineral acids are used together with CO₂ in which CO₂ is injected as gas, liquid or solid phase in order to react with the ash solution or slurry, at a temperature between 15-95°C and a pressure between 0-10 atm(abs).

5. The method according to the previous claims, wherein is applied a purge in the reactor, when is used a self-aspirating turbine to react CO₂ impure.

6. Use of the method for a selective removal of K⁺ and Cl⁻ from recovery boiler Electrostatic Precipitator ashes in a kraft process described in any of the previous claims in the pulp and paper industries.

## Amended claims

### Amended claims in accordance with Rule 137(2) EPC.

1. Method for a selective removal of K⁺ and Cl⁻ from recovery boiler Electrostatic Precipitator Ashes in a kraft process comprising the introduction of CO₂ pure or impure in the ash treatment step wherein:
- a pump and a Static Mixer is used to react the pure CO₂ with the ash solution or slurry so as to lower pH and which will partially convert the solution or slurry carbonates into bicarbonates; or
- a Self-Aspirating Turbine to react the impure CO₂ with the ash solution or slurry so as to lower pH and which will partially convert the solution or slurry carbonates into bicarbonates;
wherein the CO₂ reacts with the solution or slurry at a temperature between 15 °C and 95 °C and at a pressure between 0 and 10 atm (abs).

2. The method according to claim 1, wherein is used a mixture of a mineral acid with the CO₂ until the pH is between 8.0 and 10.0.

3. The method according to the previous claims, wherein the mineral acid is selected from sulfuric acid, hydrochloric acid, or Spent Acid.

4. The method according to the previous claims, wherein the inert gases coming from the impure CO₂ are purged from the reactor.
